# EUROPÄISCHE PATENTSCHRIFT

(11) **EP 2 935 098 B1**
(45) Veröffentlichungstag und Bekanntmachung des Hinweises auf die Patenterteilung: **14.02.2018**
(21) Anmeldenummer: 13865384.5
(22) Anmeldetag: 17.12.2013
(51) Int. Cl.: C01B 32/40, C01B 3/24, C10K 3/02, C10J 3/00, C01B 3/38, C10J 3/06

(54) **PARALLELE HERSTELLUNG VON WASSERSTOFF, KOHLENSTOFFMONOXID UND EINEM KOHLENSTOFFHALTIGEN PRODUKT**
PARALLEL PREPARATION OF HYDROGEN, CARBON MONOXIDE AND CARBON-COMPRISING PRODUCT
PRODUCTION EN PARALLÈLE D'HYDROGÈNE, DE MONOXYDE DE CARBONE ET D'UN PRODUIT CONTENANT DU CARBONE

(30) Priorität: 21.12.2012 EP 12199043
(43) Veröffentlichungstag der Anmeldung: 28.10.2015
(73) Patentinhaber: BASF SE, 67056 Ludwigshafen am Rhein (DE)
(72) Erfinder: KERN, Matthias, 67146 Deidesheim (DE); GLENK, Friedrich, 68161 Mannheim (DE); KLINGLER, Dirk, 68163 Mannheim (DE); BODE, Andreas, 68163 Mannheim (DE); KOLIOS, Grigorios, 67435 Neustadt (DE); SCHUNK, Stephan, 69126 Heidelberg (DE); WASSERSCHAFF, Guido, 69151 Neckargemünd (DE); BERNNAT, Jens, 67269 Grünstadt (DE); ZOELS, Bernd, 67283 Obrigheim (DE); SCHMIDT, Sabine, 64285 Darmstadt (DE); KÖNIG, Rene, 67435 Neustadt (DE)
(74) Vertreter: BASF IP Association
(86) Internationale Anmeldenummer: PCT/IB2013/061032
(87) Internationale Veröffentlichungsnummer: WO 2014/097142

(56) Entgegenhaltungen:
- EP-A2- 0 601 956
- WO-A1-2010/069549
- CN-A- 101 249 949
- DE-T5-112010 003 184
- GB-A- 365 912
- US-A- 4 410 504

## Beschreibung

Die Erfindung betrifft ein Verfahren zur parallelen Herstellung von Wasserstoff, Kohlenstoffmonoxid und einem kohlenstoffhaltigen Produkt, das dadurch gekennzeichnet ist, dass ein oder mehrere Kohlenwasserstoffe thermisch zersetzt werden und zumindest ein Teil des entstehenden wasserstoffhaltigen Gasgemisches aus der Reaktionszone des Zersetzungsreaktors bei einer Temperatur von 800 bis 1400°C abgezogen und mit Kohlenstoffdioxid zu einer kohlenstoffmonoxid- und wasserstoffhaltigen Gasmischung (Synthesegas) umgesetzt wird.

Die CO2-Emissionen in Deutschland betrugen im Jahre 2010 rd. 960 Mio. t CO2-Äquivalent, wobei die Chemieindustrie mit ca. 5 % beiträgt. Unter ökologischen und ökonomischen Gesichtspunkten bestehen in der Chemie-Branche hohe Anreize, die CO2-Emissionen durch Veränderung der Rohstoffbasis, CO2-arme Erzeugungstechnologien, Optimierung des Energiebedarfs und Verwertung von prozessbedingtem CO2 zu großvolumigen Basischemikalien zu senken. Geeignete Basischemikalien sind beispielsweise Wasserstoff und Synthesegas. Letzteres bildet die ideale Schnittstelle zu vorhandenen petrochemischen Verfahren für die Produktion von z.B. Methanol, Dimethylether oder Fischer-Tropsch Produkten. Die weltweiten Bedarfe für Wasserstoff und Synthesegas liegen derzeit bei 50 Mio t/a, bzw. 220 Mio t/a.

Die Dampfreformierung ist das derzeit am weitesten verbreitete Verfahren zur Erzeugung von Synthesegas mit einem Wasserstoff zu Kohlenstoffmonoxid-Verhältnis von 2,5 bis 3,0 aus leichten Kohlenwasserstoffen. Durch den zusätzlichen Aufwand der Durchführung einer Shiftstufe kann der Wasserstoffanteil noch weiter zu Ungunsten des Kohlenstoffmonoxid-Anteiles heraufgesetzt werden. Die Einsatzstoffe Erdgas, Flüssiggas oder Naphtha werden mit Wasserdampf in katalytischen Rohrreaktoren endotherm zu Synthesegas mit hohem Wasserstoffgehalt umgesetzt. Prozesswärme und Rauchgaswärme werden zur Dampferzeugung genutzt.

Problematisch ist die Herstellung von Synthesegas mit einem Wasserstoff zu Kohlenstoffmonoxid-Verhältnis von 1,0 bis 2,0 durch Dampfreformierung. Dieses Verhältnis an H₂/CO ist von besonderer Bedeutung für Downstream-Nutzung im Bereich Treibstoffe und Chemikalien und stellt für die Dampfreformierung eine besondere Herausforderung dar, da hier Katalysatoren benötigt werden, die eine besondere Stabilität gegen Verkokung aufweisen. Alternative Verfahren zur Herstellung von Synthesegas mit einem H₂/CO Verhältnis von 1,0 bis 2,0 sind die autotherme Reformierung von Erdgas und die Partialoxidation. Beide Verfahren werden technisch angewendet, erfordern aber den Einsatz von Reinsauerstoff, der durch Luftzerlegung gewonnen wird. Beispielsweise benötigt die Partialoxidation von Erdgas im Zulauf ein theoretisches molares Verhältnis O₂:CH4=1:2. Die energetisch sehr anspruchsvolle kryogene Luftzerlegung ist daher für die beiden letzteren Verfahren ein maßgeblicher Kostentreiber.

Bedeutende Abnehmer von Synthesegas sind u.a. die Methanolsynthese (Wasserstoff zu Kohlenstoffmonoxid-Verhältnis von 2:1), die Oxo-Synthese zur Herstellung von Alkoholen und Aldehyden aus Olefinen (Wasserstoff zu Kohlenstoffmonoxid-Verhältnis von 1:1) oder Fischer-Tropsch-Synthese zu Alkanen (Wasserstoff zu Kohlenstoffmonoxid-Verhältnis von 2:1) oder die Fischer-Tropsch-Synthese zu Olefinen (Wasserstoff zu Kohlenstoffmonoxid-Verhältnis von 1:1).

Daneben dient Synthesegas als Wasserstoffquelle für die Ammoniaksynthese. Dafür wird ein wasserstoffreiches Synthesegas aus der Dampfreformierung (Wasserstoff zu Kohlenstoffmonoxid-Verhältnis von 3:1) in einer Wassergas-Shift-Reaktionsstufe weiter an Wasserstoff angereichert. Dabei wird CO in CO₂ umgesetzt, das anschließend abgetrennt wird. Dadurch wird reiner Wasserstoff gewonnen.

Ein weiterer Nachteil der katalytischen Dampfreforming ist deren Anfälligkeit gegen Katalysatorgifte wie beispielsweise Schwefel. Um den Katalysator davor zu schützen, muss das Einsatzgas in vorgelagerten Prozessstufen aufwendig gereinigt werden. Organische Schwefelverbindungen, beispielsweise Merkaptane oder Thiophene werden vorher an Co-Mo oder Ni-Mo-Katalysatoren zu Schwefelwasserstoff hydriert. Schwefelwasserstoff wird beispielsweise an ZnO umgesetzt, das sich dabei in ZnS umwandelt und regelmäßig ersetzt werden muss. Ferner ist die Wärmeintegration der Dampfreforming unvollständig, es werden lediglich ca. 50% der erzeugten Wärme effektiv für die Reaktion genutzt. Desweiteren weist das so hergestellte Synthesegas einen recht hohen CO2-Footprint von ca. 40 kg_{CO2}/100 kg_{Synthesegas} auf.

Die Reformierung von Methan und Kohlenstoffdioxid, ein alternativer Weg zur Herstellung von Synthesegas, ist von großem wirtschaftlichem Interesse, da diese Verfahren die Möglichkeit bietet, Synthesegas als wichtige Basischemikalie unter Verwertung von Kohlenstoffdioxid als Ausgangsstoff herzustellen. Demnach könnte Kohlenstoffdioxid, das in zahlreichen Prozessen als Abfallprodukt anfällt, auf chemischem Weg gebunden werden. Hierdurch besteht die Möglichkeit, Kohlenstoffdioxid-Emission in die Atmosphäre zu vermindern. Auch hier stellt die Katalysatorentwicklung eine besondere Herausforderung dar, da hier ebenfalls Katalysatoren benötigt werden, die eine besondere Stabilität gegen Verkokung aufweisen.

Derartige Verfahren sind beispielsweise aus den Patentanmeldungen US 2009/203519 und US 2011/089378 bekannt. Beide Anmeldungen beschreiben Verfahren, bei denen Methan und Kohlenstoffdioxid über einen Katalysator geleitet und dabei durch Trockenreformierung umgesetzt werden. Aufgrund des Boudouard-Gleichgewichts sowie der thermischen Zersetzung von Methan entsteht Kohlenstoff, der sich unter anderem auf dem Katalysator absetzt und diesen vergiftet, so dass in periodischen Abständen der Katalysator ausgetauscht oder regeneriert werden muss.

Ein weiterer alternativer Weg zur Herstellung von Synthesegas unter Verwendung von Kohlenstoffdioxid als Ausgangsstoff ist die Reverse Wasser-Gas-Shift (RWGS) Reaktion. Die CO₂-Aktivierung mit Wasserstoff über die RWGS führt zu Kohlenstoffmonoxid und Wasser und ist mit 41 kJ/mol bei Normalbedingungen endotherm. Gemäß dem thermodynamischen Gleichgewicht sind für eine substantielle CO-Bildung Temperaturen von größer 500°C erforderlich, da bei Temperaturen unter 500°C sonst präferentiell eine Methanisierung erfolgt. Für die Reaktion sind nur Laborstudien bekannt (Luhui, W.; Shaoxing, Z.; Yuan, L.: Reverse water gas shift reaction over co-precipitated Ni-CeO2 catalysts. Journal of Rare Earths 2008, 26, 66-70; Yablonsky, G.S.; Pilasombat, R.; Breen, J.P.; Bruch, R.; Hengrasmee, S.: Cycles Across an Equilibrium: A Kinetic Investigation of the Reverse and Forward WGS Reaction over a 2% Pt/CeO2 Catalyst (Experimental Data and Qualitative Interpretation). Chem. Eng. Sci. 2010, 65, 2325-2332; Jess, A.; Kaiser, P.; Kern, C.; Unde, R.B.; Olshausen, C.: Considerations concerning the Energy Demand and Energy Mix for Global Welfare and Stable Ecosystems. Chemie Ingenieur Technik 2011, 83, 1777-1791).

DE 11 2010 003 184 offenbart ein Verfahren zur Erzeugung von Synthesegas, bei dem: (a) Methan -aus einer Vergasungsstufe- in einer zweiten Reaktionsstufe thermisch in Wasserstoff und Kohlenstoff zersetzt und (b) ein Teil des dabei entstehenden wasserstoffhaltigen Gasgemisches aus der zweiten Reaktionsstufe in eine dritte Reaktionsstufe geleitet wird, um dort mit Kohlendioxid durch Reverse Wassergas-Shift zu Wasser und Kohlenmonoxid umgesetzt zu werden. Der in der thermischen Zersetzung erzeugte Kohlenstoff wird entweder als Edukt für die Umwandlung von CO2 oder als Kraftstoff zur Bereitstellung der Reaktionswärme für die Vergasungsreaktion genutzt.

Großtechnisch wird die RWGS-Reaktion bisher nicht ausgeführt, da bislang keine kostengünstige Wasserstoffquelle mit kleinem oder akzeptablem CO2-Footprint zur Verfügung steht, die eine wirtschaftliche Durchführung der RWGS-Reaktion bei hohen Temperaturen begründen könnte.

Die kompetitivsten Verfahren zur Herstellung von Wasserstoff sind nach wie vor Dampfreformierungsverfahren. Diese Verfahren haben zwar einen inhärenten Preisvorteil der sich im Wasserstoffpreis niederschlägt, allerdings ist die Wasserstofferzeugung gekoppelt mit einer hohen Emission an Kohlenstoffdioxid. Daher ist es aus der technischen und wirtschaftlichen Betrachtungsweise nicht sinnvoll, den in der Dampfreformierung erzeugten Wasserstoff zur Hydrierung von Kohlenstoffdioxid in einem weiteren endothermen Verfahrensschritt einzusetzen. Alternative Wasserstoffquellen auf Basis regenerativer Rohstoffe, können zwar die Kopplung der Produktion an Kohlenstoffdioxid aus der Wasserstofferzeugung umgehen. Allerdings ist hier zu berücksichtigen, dass das für die Synthesegaserzeugung benötigte hohe Temperaturniveau der RWGS immer noch einen hohen Energieeintrag benötigt.

Obwohl Hochtemperatur-RWGS-Reaktionen wirksam zur Erzielung eines hohen Umsatzes an Kohlenstoffdioxid und zur Unterdrückung der Methanisierung und der Kohlenstoffbildung als unerwünschte Nebenreaktionen vorteilhaft wären, wurde diese bislang wenig untersucht. Die Durchführung der Reaktion auf diesem Temperaturniveau erfordert einen sehr hohen technischen Aufwand für den Wärmeeintrag oder eine energetisch günstige Kopplung mit einer Hochtemperaturquelle. Nach dem aktuellen Stand der Technik kommen für den Hochtemperatur-Energieeintrag lediglich Öfen vergleichbar den Dampfreformern in Frage. In diesen Verfahren kann die erzeugte Wärmemenge allerdings nur ca. zu 50% von der endothermen Reaktion aufgenommen werden. Die Überschusswärme muss somit in einem aufwendigen Netzwerk von Wärmeüberträgern abgeführt und in den Prozess, beispielsweise zu Vorheizung der Zuläufe, zurückgeführt werden.

In der Literatur, z.B. Kreysa, CIT 80 (2008), 901-908, finden sich Hinweise, dass sich Wasserstoff mit einem geringen CO2-Footprint mit Hilfe einer thermischen Zersetzung (Pyrolyse) von Kohlenwasserstoffen in einem Fließbett aus einem kohlenstoffhaltigen Granulat herstellen lässt. Durch die Gegenstromführung des gasförmigen Reaktionsgemisches und des kohlenstoffhaltigen Granulats wird ein Verfahren mit integrierter Wärmerückführung realisiert. Mit diesem Verfahren kann allerdings bestenfalls ein Wirkungsgrad der Wärmeintegration - definiert als Verhältnis der durch die endotherme Reaktion verbrauchten zur eingetragenen Wärmemenge - von 83% erreicht werden. Grund dafür ist das Verhältnis der Wärmekapazitäten zwischen den Edukten und den Produkten der Pyrolyse: Beispielsweise beträgt die mittlere spezifische Wärmekapazität des eingesetzten Methans zwischen 100°C und 1200°C 4,15 J/g/K. Das daraus produzierte Gemisch aus H2 und C hat eine mittlere spezifische Wärmekapazität zwischen 100°C und 1200°C von 5,02 J/g/K. Dieses Verhältnis der Wärmekapazitäten legt den maximal erreichbaren Wirkungsgrad der Wärmeintegration fest.

Die Aufgabe der vorliegenden Erfindung war demnach, einen Weg zur parallelen Herstellung von Wasserstoff, Kohlenstoffmonoxid und/oder einem festen kohlenstoffhaltigen Produkt mit geringem CO₂-Fußabdruck unter wirtschaftlich attraktiven Rahmenbedingungen für die chemische Industrie bereitzustellen.

Ferner war die Aufgabe, geeignete Verfahrensbedingungen aufzufinden, die eine wirtschaftlich und technisch attraktive Durchführung der Reverse Wasser-Gas-Shift Reaktion bei hohen Temperaturen erlauben.

Eine weitere Aufgabe war es, ein Verfahren zur Synthesegas-Herstellung aufzuzeigen, das nicht nur ein fixes Wasserstoff zu Kohlenstoffmonoxid-Verhältnis produzieren kann, sondern bei dem sich das Wasserstoff zu Kohlenstoffmonoxid-Verhältnis bedarfsgesteuert einstellen lässt.

Eine weitere Aufgabe war, ein Verfahren zur thermischen Zersetzung von Kohlenwasserstoffen zu Kohlenstoff und Wasserstoff und die Konvertierung des Wasserstoffes mit Kohlenstoffdioxid zu Synthesegas aufzuzeigen, die eine möglichst vollständige Wärmeintegration, d.h. einen höheren Wirkungsgrad als die Einzelreaktion der thermischen Zersetzung von Kohlenwasserstoffen zu Kohlenstoff und Wasserstoff, aufweist.

Günstig erscheint die Kopplung der RWGS an einen Hochtemperatur- Prozess dessen Wärmeüberschuss als treibende Kraft für die RWGS genutzt wird. Durch die angestrebte Wärmeintegration kann ein Szenario geschaffen werden in dem der Wärmestrom des Hochtemperaturprozesses genutzt wird, um die RWGS auf hohem Temperaturniveau zu betreiben.

Die Aufgabe wurde durch ein Verfahren gelöst, das dadurch gekennzeichnet ist, dass ein oder mehrere Kohlenwasserstoffe thermisch zersetzt werden und zumindest ein Teil des entstehenden wasserstoffhaltigen Gasgemisches aus der Reaktionszone des Zersetzungsreaktors bei einer Temperatur von 800 bis 1400 °C abgezogen und der Reaktionszone eines Reversen Wassergas-Shift Reaktors mit einem Sollwert von 800 bis 2000°C zugeführt wird und mit Kohlenstoffdioxid in einer Reversen Wassergas-Shift Reaktion zu einer kohlenstoffmonoxid- und wasserstoff- haltigen Gasmischung (Synthesegas) umgesetzt wird.

Das wasserstoffhaltige Gasgemisch enthält vorteilhaft mehr als 50 Volumen-% Wasserstoff, bevorzugt mehr als 60 Volumen-% Wasserstoff, besonders bevorzugt mehr als 70 Volumen-%, ganz besonders bevorzugt mehr als 80 Volumen-% (entspricht ca. 67% Methanumsatz), weiter bevorzugt mehr als 90 Volumen-%, (entspricht ca. 80% Methanumsatz), insbesondere mehr als 95 Volumen-% (entspricht ca. 90% Methanumsatz). Entsprechend enthält das wasserstoffhaltige Gasgemisch maximal 20 Volumen-% Methan, Kohlenstoffmonoxid, Kohlenstoffdioxid und Stickstoff sowie weitere dem Fachmann in diesem Zusammenhang bekannte Gase, bevorzugt maximal 10 Volumen-%, besonders bevorzugt maximal 5 Volumen-%.

Vorteilhaft enthält das wasserstoffhaltige Gasgemisch 50 bis 100 Volumen-% Wasserstoff, bevorzugt 85 bis 100 Volumen-%, insbesondere 95 bis 100 Volumen-%. Der Anteil an Methan, Kohlenstoffmonoxid, Kohlenstoffdioxid und Stickstoff beträgt vorteilhaft 50 bis 0 Volumen-%, bevorzugt 15 bis 0 Volumen-%, insbesondere 5 bis 0 Volumen-%. Vorteilhaft beträgt der Anteil an Kohlenstoffdioxid weniger als 1 Volumen-%, bevorzugt weniger als 0,1 Volumen-%. Vorteilhaft beträgt der Anteil an Kohlenstoffmonoxid weniger als 5 Volumen-%, bevorzugt weniger als 1 Volumen-%. Vorteilhaft beträgt der Anteil an Methan weniger als 30 Volumen-%, bevorzugt weniger als 5 Volumen-%. Vorteilhaft beträgt der Anteil an Stickstoff weniger als 20 Volumen-%, bevorzugt weniger als 6 Volumen-%.

Die kohlenstoffmonoxid- und wasserstoff- haltige Gasmischung enthält vorteilhaft (i) 20-70 mol-% Wasserstoff, bevorzugt 30 bis 60 mol-%, insbesondere 35 bis 55 mol-% insbesondere 35 bis 45 mol-%; (ii) vorteilhaft 5 bis 60 mol-% Kohlenstoffmonoxid, bevorzugt 7,5 bis 35 mol-%, insbesondere 15 bis 30 mol-%; (iii) vorteilhaft 0 bis 25 mol-% Kohlenstoffdioxid, bevorzugt 5 bis 20 mol-% insbesondere 8 bis 20 mol-%; (iv) vorteilhaft 15 bis 35 mol-% Wasser, bevorzugt 20 bis 30 mol-%; (v) vorteilhaft 0 bis 15 mol-% Methan, bevorzugt 0 bis 10 mol.-% insbesondere 0 bis 5 mol.-%.

Die Kohlenwasserstoffe werden vorteilhaft in Form eines kohlenwasserstoffhaltigen Gases dem Zersetzungsreaktor zugeführt. Vorteilhaft wird Methan, Ethan, Propan und/oder Butan verwendet. Bevorzugt wird als kohlenwasserstoffhaltigen Gas Erdgas verwendet, wobei im Erdgas der Methananteil typischerweise zwischen 75 und 99 % der molaren Faktion in Abhängigkeit von der Erdgaslagerstätte liegt.

Vorteilhaft werden die Kohlenwasserstoffe mit einer Temperatur von 0 bis 100°C, bevorzugt 10 bis 50°C dem Zersetzungsreaktor zugeführt. Vorteilhaft werden die Kohlenwasserstoffe mit einem Druck von 1 bis 50 bar, bevorzugt 2 bis 40 bar, insbesondere 5 bis 30 bar dem Zersetzungsreaktor zugeführt. Vorteilhaft werden die Kohlenwasserstoffe mit einem Durchsatz von 100 bis 200000 Nm³/h, bevorzugt von 1000 bis 100000 Nm³/h, insbesondere 7000 bis 70000 Nm³/h, dem Zersetzungsreaktor zugeführt.

Die thermische Zersetzungsreaktion (Pyrolyse) wird vorteilhaft bei Temperaturen in der Reaktionszone von durchschnittlich größer als 500°C, bevorzugt durchschnittlich größer 800°C, besonders bevorzugt größer 1000°C, ganz besonders bevorzugt größer 1100°C, insbesondere größer 1200°C, durchgeführt. Beispielsweise liegt die Temperatur der Zersetzungsreaktion in einem Bereich von 800 bis 2500°C, bevorzugt in einem Bereich von 1000 bis 1800°C, weiter bevorzugt in einem Bereich von 1100 bis 1600°C, insbesondere in einem Bereich von 1200 bis 1400°C.

Die für die Durchführung des erfindungsgemäßen Verfahrens erforderliche thermische Energie kann beispielsweise via oxidative, z. B. die Verbrennung von Erdgas, solare, z.B. Hochtemperatursolarkraftwerke, und/oder elektrische Energiequellen bereitgestellt werden (International Journal of Hydrogen Energy 35(2010)1160-1190). Der Energieeintrag kann mit Hilfe aller dem Fachmann bekannten Verfahren erfolgen. Um thermische Energie für die Behandlung der Prozessströme über elektrischen Strom bereitzustellen, können unterschiedliche Wege beschritten werden. Beispielsweise sind hier induktive oder resistive Verfahren, Plasmaverfahren, ein Erwärmen durch elektrisch leitfähige Heizelemente/Kontaktflächen oder durch Mikrowellen zu nennen.

Die thermische Zersetzungsreaktion wird vorteilhaft bei einem Druck von Atmosphärendruck bis 70 bar, bevorzugt 2 bis 60 bar, besonders bevorzugt 3 bis 50 bar, ganz besonders bevorzugt 5 bis 40 bar, insbesondere 7 bis 30 bar durchgeführt.

Thermodynamisch ist die Reaktion bei niedrigem Druck begünstigt: Bei Normaldruck beträgt die Gleichgewichtstemperatur für 99%-Umsatz 875°C, bei 10 bar liegt der entsprechende Wert bei über 1900°C.

Kinetisch und prozesstechnisch sind höhere Drücke vorteilhaft. Steigender Druck beschleunigt die Decarbonierungsreaktion. Darüber hinaus ist ein hoher Druck in der Pyrolysestufe kompatibel sowohl mit vorgelagerten als auch mit nachgeschalteten Stufen: Der Druck in Erdgasleitungen beträgt üblicherweise 50 bar. Die Anwendungen für den erzeugten Wasserstoff oder für das Synthesegas sind Hochdruckprozesse, beispielsweise die Ammoniaksynthese (>100bar), die Methanolsynthese (>50bar) oder die Druckspeicherung von Wasserstoff (ca. 700bar).

Die Verweilzeit in der Reaktionszone bei der erfindungsgemäßen thermischen Zersetzungsreaktion beträgt vorteilhaft 0,5 bis 25 Minuten, bevorzugt 1 bis 60 Sekunden, insbesondere 1 bis 30 Sekunden.

Die erfindungsgemäße Zersetzungsreaktion wird vorteilhaft kontinuierlich oder quasi-kontinuierlich durchgeführt.

Die thermische Zersetzung von Kohlenwasserstoffe wird vorteilhaft in einem Fließbettreaktor durchgeführt.

Der Reaktionsraum der thermischen Zersetzungsreaktion weist vorteilhaft einen zylindrischen Querschnitt auf und sein komplettes Volumen ist sowohl für die festen und gasförmigen Reaktionsströme als auch für mögliche gasförmige Wärmeträger zugänglich. Der Begriff Reaktionsraum umfasst neben der Reaktionszone die Zonen im Reaktor, die zum Aufheizen und Abkühlen verwendet werden, ferner ggf. auch andere Elemente wie Zuleitungen, Quench etc. Vorteilhaft wird die thermische Zersetzungsreaktion in Anwesenheit eines Trägers, z.B. eines mineralischen Trägers (beispielsweise Korund (Al2O3), Quarzglas (SiO2), Mullit Al2O3.SiO2), Cordierit ((Mg,Fe²⁺)₂(Al₂Si) [Al₂Si₄O₁₈]), Steatit (SiO2.MgO.Al2O3)) oder eines kohlenstoffhaltigen Granulats, durchgeführt. Vorzugsweise wird der Träger, bevorzugt das kohlenstoffhaltige Granulat, als Wanderbett durch den Reaktionsraum geführt, wobei die zu zersetzenden Kohlenwasserstoffe zweckmäßigerweise im Gegenstrom zu dem Träger, bevorzugt einem kohlenstoffhaltigen Granulat geleitet werden. Der Reaktionsraum ist hierfür sinnvollerweise als senkrechter Schacht ausgeführt, so dass die Bewegung des Wanderbetts alleine unter Wirkung der Schwerkraft zustande kommt. Das Wanderbett ist vorteilhaft homogen und gleichmäßig durchströmbar.

Unter einem kohlenstoffhaltigen Granulat ist in der vorliegenden Erfindung ein Material zu verstehen, das vorteilhaft aus festen Körnern besteht, die mindestens 50 Gew.-%, bevorzugt mindestens 80 Gew.-%, insbesondere mindestens 90 Gew.-% Kohlenstoff aufweisen. Das kohlenstoffhaltige Granulat besitzt vorteilhaft eine Körnung, d.h. einen Äquivalenzdurchmesser, der durch Siebung mit einer bestimmten Maschengröße bestimmbar ist, von 0,5 bis 100 mm, bevorzugt von 1 bis 80 mm. Das kohlenstoffhaltige Granulat ist vorteilhaft kugelförmig. In dem erfindungsgemäßen Verfahren kann eine Vielzahl von unterschiedlichen kohlenstoffhaltigen Granulaten eingesetzt werden. Ein derartiges Granulat kann beispielsweise aus Kohle, Koks, Koksgrus und/oder Mischungen hieraus bestehen. Koksgrus weist in der Regel eine Körnung von kleiner 20 mm auf. Ferner kann das kohlenstoffhaltige Granulat 0 bis 15 Gew.-% bezogen auf die Gesamtmasse des Granulats, bevorzugt 0 bis 5 Gew.-%, Metall, Metalloxid und/oder Keramik enthalten. Mit besonderem Vorzug werden Granulate eingesetzt, die Koksgrus und/oder geringwertigen, d.h. nicht direkt für den Verhüttungsprozess geeigneten Koks, Kokereikoks auf Braun- oder Steinkohlebasis und/oder aus Biomasse gewonnenen Koks umfassen.

Die Wärmekapazitätsströme der miteinander Wärme austauschenden Medien liegen vorteilhaft möglichst nahe beieinander. Vorteilhaft ist der Massenstrom des zugeführten Trägers, bevorzugt des kohlenstoffhaltigem Granulats, das 1- bis 3-fache, bevorzugt das 1,7- bis 2,5-fache des Massenstroms des zugeführten Kohlenwasserstoffs (ohne Berücksichtigung von Inertgasen).

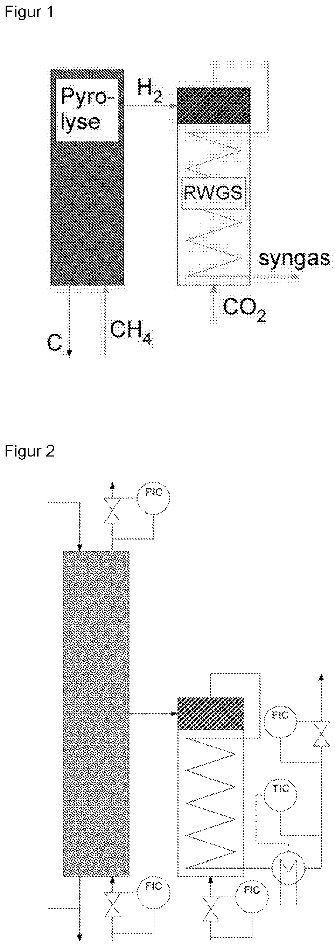

Falls das wasserstoffhaltige Gasgemisch vollständig aus der Reaktionszone der Pyrolyse abgezogen wird, siehe (Fig. 1), können vorteilhaft die obere Wärmeübertragungszone im Pyrolysereaktor, die Feststoffrückführung und der ggf. Feststoffzulauf, eingespart werden. Dadurch werden die apparative Gestaltung und der Betrieb des Pyrolysereaktors erheblich vereinfacht. Der vollständige Abzug des Wasserstoffs aus der Reaktionszone der Pyrolyse ist insbesondere dann vorteilhaft, wenn Synthesegas als einziges fluides Produkt hergestellt werden soll. Vorteilhaft wird in diesem Fall im Pyrolysereaktor ein Träger, z.B. ein mineralischer Träger oder ein kohlenstoffhaltiges Granulat als Anfangsfüllung vorgelegt. Der obere Abschnitt des Pyrolysereaktors wird vorteilhaft auf die erforderliche Pyrolysetemperatur beheizt. Vorteilhaft wird von unten Methan bei Umgebungstemperatur in den Pyrolysereaktor eingeleitet, bevorzugt bei Temperaturen kleiner 600°C, insbesondere kleiner 400°C, weiter bevorzugt kleiner 250°C, weiter bevorzugt kleiner als 100°C, insbesondere im Bereich 0 bis 50°C. Am unteren Reaktorende wird ein Feststoffstrom abgeführt, der im stationären Betrieb der produzierten Menge des kohlenstoffhaltigen Produktes entspricht. Durch diese Fahrweise erneuert sich kontinuierlich der Feststoff im Pyrolysereaktor. Durch die Gegenstromführung des Gas- und des Feststoffstroms im unteren Abschnitt des Pyrolysereaktors wird eine Wärmeintegration realisiert. Das Massenstromverhältnis des gasförmigen Zulaufs und des festen Produktstroms liegt vorteilhaft zwischen 0,65 und 3, bevorzugt zwischen 1,0 und 2,0, besonders bevorzugt zwischen 1,2 und 1,5. Die Feststoffpackung im Pyrolysereaktor bildet vorteilhaft unter Betriebsbedingungen ein Fließbett aus. Im Bereich der Wärmeübertragungszone bildet sich vorteilhaft ein Wanderbett, das geschichtet mit geringer axialer Dispersion nach unten fließt. Im Bereich der Reaktionszone kann sich vorteilhaft ein Wanderbett oder ein Wirbelbett ausbilden. Das Wirbelbett in der Reaktionszone besitzt günstige Wärmetransporteigenschaften für den Wärmeeintrag und für die Einstellung eines gleichmäßigen Temperaturfeldes.

Falls das wasserstoffhaltige Gasgemisch vollständig aus der Reaktionszone der Pyrolyse abgezogen wird, wird dieser vorteilhaft am oberen Ende des Pyrolysereaktors heiß abgezogen. Die Temperatur des abgezogenen Stroms liegt in einem Bereich von 800 bis 1400°C, bevorzugt in einem Bereich vom 1000 bis 1400°C, weiter bevorzugt in einem Bereich von 1100 bis 1400°C, insbesondere in einem Bereich von 1200 bis 1400°C. Falls nur ein Teil des während der thermischen Zersetzungsreaktion produzierten wasserstoffhaltigen Gasgemisches abgezogen wird, wird vorteilhaft der Träger, bevorzugt das kohlenstoffhaltige Granulat als Wanderbett durch den Reaktionsraum geführt. Eine besonders bevorzugte Variante des erfindungsgemäßen Verfahrens sieht vor, dass der Träger, bevorzugt das Granulat mit Umgebungstemperatur, bevorzugt bei Temperaturen kleiner 600°C, insbesondere kleiner 400°C, weiter bevorzugt kleiner 250°C, weiter bevorzugt kleiner als 100°C, insbesondere im Bereich 0 bis 50°C, in den Reaktionsraum eingeleitet, dort zunächst bis auf eine Maximaltemperatur aufgeheizt und anschließend wieder abgekühlt wird, wobei die Maximaltemperatur in einer Hochtemperaturzone, der Reaktionszone, liegt, in der Temperaturen von durchschnittlich größer als 800°C, bevorzugt größer als 1000°C, weiter bevorzugt größer als 1100°C, insbesondere größer als 1200°C herrschen. Beispielsweise liegt die Temperatur der Zersetzungsreaktion in einem Bereich von 800 bis 2500°C, bevorzugt in einem Bereich von 1000 bis 1800°C, weiter bevorzugt in einem Bereich von 1100 bis 1600°C, insbesondere in einem Bereich von 1200 bis 1400°C. Unter dem Begriff Reaktionszone wird bei der vorliegenden Erfindung derjenige Bereich im Reaktor verstanden, in welchem die Endothermie, d.h. der Wärmebedarf der Reaktion, vorteilhaft 10 kW/m³, bevorzugt 100 kW/m³, insbesondere 500 kW/m³ übersteigt. Dies entspricht in etwa dem Bereich im Reaktor, der eine Temperatur von größer 500°C aufweist.

Die Abkühlung kann bis in die Nähe der Umgebungstemperatur durchgeführt werden, so dass eine Kühlung bzw. Löschung des aus dem Reaktionsraum abgezogenen Trägers, bevorzugt kohlenstoffhaltigen Granulats nicht erforderlich ist. Zur Ausbildung und Aufrechterhaltung des beschriebenen Temperaturprofils wird vorgeschlagen, zumindest den Träger, bevorzugt das kohlenwasserstoffhaltige Gas mit Umgebungstemperatur in den Reaktionsraum einzuleiten und im Gegenstrom durch das Wanderbett zu führen. Auf seinem Weg durch den Reaktionsraum tauscht der Träger, bevorzugt das kohlenwasserstoffhaltigen Gas in direktem Kontakt mit dem Wanderbett Wärme aus, wobei das kohlenwasserstoffhaltige Gas bis auf über 1000°C, bevorzugt bis auf über 1100°C, insbesondere bis auf über 1200°C aufgeheizt und das Wanderbett gleichzeitig abgekühlt wird. In der Hochtemperaturzone gebildete heiße wasserstoffhaltige Gasgemisch wird zum einen zumindest teilweise bei Temperaturen von 800 bis 1400°C abgezogen, zum anderen weiter im Gegenstrom durch das Wanderbett geführt und in direktem Wärmetausch mit diesem abgekühlt, so dass Wasserstoff mit einer Temperatur in der Nähe der Umgebungstemperatur aus dem Reaktionsraum abgezogen werden kann.

Für die Wasserstofferzeugung erforderliche thermische Energie wird insbesondere in der Hochtemperaturzone erzeugt und/oder in die Hochtemperaturzone eingebracht. Die Erzeugung und/oder Einbringung von thermischer Energie an anderen Stellen des Reaktionsraumes soll jedoch nicht ausgeschlossen werden.

In der Reaktionszone stellt sich vorteilhaft ein ausreichend hohes Temperaturniveau ein, um einen Umsatz der thermischen Zersetzung der Kohlenwasserstoffe von größer als 80%, bevorzugt größer als 90%, insbesondere Vollumsatz zu erreichen. Ferner kann der Umsatz der thermischen Zersetzung über die Verweilzeit gesteuert werden. Beispielsweise ergibt eine Gasverweilzeit von 2 Sekunden bei 1200°C und Umgebungsdruck einen relativen Methanumsatz von ca. 67%, eine Verweilzeit von 3 Sekunden einen Methanumsatz von ca. 80% und eine Verweilzeit von 4,5 Sekunden einen Methanumsatz von ca. 90%. Die Verweilzeit ist definiert als das Verhältnis des Leerraumvolumens der Reaktionszone zum Volumenstrom des Gasstroms am Eintritt der Reaktionszone.

Der durch die erfindungsgemäße Zersetzungsreaktion gebildete Kohlenstoff lagert sich vorteilhaft zu mindestens 90 Gew.-% bezogen auf die gesamte Masse des gebildeten Kohlenstoffs, bevorzugt mindestens 95 Gew.-%, an den Träger, vorteilhaft an das kohlenstoffhaltige Granulat an.

Unter einem kohlenstoffhaltigen Produkt ist in der vorliegenden Erfindung ein Produkt zu verstehen, dass vorteilhaft zu mindestens 90 Gew.-%, bevorzugt zu mindestens 95 Gew.-%, besonders bevorzugt zu mindestens 98 Gew.-%, insbesondere zu mindestens 99 Gew.-%, aus Kohlenstoff besteht. Das kohlenstoffhaltige Produkt weist vorteilhaft weniger als 5 Gew.-%, bevorzugt weniger als 1 Gew.-%, besonders bevorzugt weniger als 0,1 Gew.-%, bezogen auf die Gesamtmasse des kohlenstoffhaltigen Produkts, an Asche auf. Das kohlenstoffhaltige Produkt weist vorteilhaft weniger als 5 Gew.-%, bevorzugt weniger als 1 Gew.-%, besonders bevorzugt weniger als 0,1 Gew.-,% bezogen auf die Gesamtmasse des kohlenstoffhaltigen Produkts, an Alkalien, insbesondere Oxide und Hydroxide der Alkali- und Erdalkalimetalle, schwefel- und/oder phosphorhaltigen Verbindungen auf. Diese kohlenstoffhaltigen Produkte lassen sich beispielsweise in der Stahlbranche als Einblaskohle, als Kokskohlenzusatzstoff oder als Hochofenkoks einsetzen.

Vorteilhaft werden durch das erfindungsgemäße Verfahren mindestens 5 Gew.-%, bezogen auf die ursprüngliche Gesamtmasse des Granulats, Kohlenstoff auf dem eingesetzten kohlenstoffhaltigen Granulat abgeschieden, bevorzugt mindestens 10 Gew.-%, besonders bevorzugt mindestens 20 Gew.-%, insbesondere mindestens 30 Gew.-%. Die Masse des eingesetzten kohlenstoffhaltigen Granulats lässt sich vorteilhaft durch das erfindungsgemäße Verfahren um 10 Gew.-% bis 80 Gew.-% bezogen auf die ursprüngliche Gesamtmasse des Granulats, bevorzugt um 20 Gew.-% bis 50 Gew.-%, besonders bevorzugt um 25 bis 40 Gew.-%, vergrößern.

Die CO2-Emission liegt beim erfindungsgemäßen Verfahren für 100 kg Wasserstoff vorteilhaft bei weniger als 10 kg CO2/kgH2, bevorzugt bei weniger als 8 kg CO2/kgH2, insbesondere bei weniger als 6 kg CO2/kgH2.

Die thermische Zersetzungsreaktion kann beispielsweise wie in der internationalen Patentanmeldung WO 2013/004398 (P11C078 PCT/EP2012/002877) oder anhand der dort zitierten Literatur beschrieben durchgeführt werden.

Durch die Gegenstromführung des Gas- und des Feststoffstroms wird eine wärmeintegrierte Fahrweise erreicht.

Die Wärmerückführung der thermischen Zersetzungsreaktion ist vorteilhaft derart, dass die mittlere Temperatur der Produktströme ausgenommen des aus der Reaktionszone abgezogenen wasserstoffhaltigen Gasgemisches, d.h. Wasserstoff und kohlenstoffhaltiges Produkt, maximal 50 bis 100K, bevorzugt maximal 25 bis 50K, insbesondere maximal 5 bis 20K über der mittleren Eintrittstemperatur des Ausgangsstroms, bzw. des kohlenstoffhaltigen Granulats liegt.
Dieser Grad der Wärmeintegration wird erfindungsgemäß dadurch erreicht, dass ein Teilstrom des wasserstoffreichen Gasstroms mit Temperaturen von 800 bis 1400°C direkt aus der Reaktionszone abgezogen wird.

Der Wirkungsgrad der Wärmeintegration (η=(Temperatur der Reaktionszone - Gasaustrittstemperatur des Hauptstroms)/(Temperatur der Reaktionszone-Feststoffeintrittstemperatur) liegt vorteilhaft bei größer als 50%, bevorzugt bei größer als 75%, weiter bevorzugt größer als 90%, insbesondere größer als 95%.

Vorteilhaft wird zumindest ein Teil des erzeugten wasserstoffhaltigen Gasgemisches, bevorzugt 10 bis 40 % (bezogen auf Verhältnis Seitenabzug/Hauptstrom Wasserstoff), besonders bevorzugt 15 bis 35 %, ganz besonders bevorzugt 18 bis 30 %, insbesondere 20 bis 25 % aus der Reaktionszone abgezogen.

Alternativ wird der gesamte im thermischen Zersetzungsverfahren erzeugte heiße Wasserstoff abgezogen.

Der Gas-Abzug kann durch alle dem Fachmann bekannten Verfahren (Vorrichtungen zum Gas-Abzug oberhalb eines Wirbelbettes werden beispielsweise in Ullmann Kapitel "Fluidized-Bed Reactors" beschrieben) durchgeführt werden. Der Abzug kann beispielsweise über eine temperaturbeständige Verbindungsleitung zwischen dem Pyrolyse- und dem RWGS-Reaktor realisiert werden (Nieken: Abluftreinigung in Reaktoren mit periodischer Strömungsumkehr. VDI Reihe 3 Nr. 328. VDI-Verlag 1993). Fig. 2 zeigt beispielhaft das Fließbild einer Durchflussregelung für den Seitenabzug. Die Regelarmaturen sind vorteilhaft in den kalten Zu- und Ableitungen des Pyrolyse- und des RWGS-Reaktors installiert.

Die Temperatur des abgezogenen wasserstoffhaltigen Gasgemisches beträgt 800 bis 1400°C, bevorzugt 1000 bis 1400°C, weiter bevorzugt 1100 bis 1400°C, weiter besonders 1200 bis 1400°C. Durch die geregelte Zugabe eines sauerstoffhaltigen Gases zum Seitenabzug, beispielsweise von Luft, bevorzugt jedoch von Sauerstoff technischer Reinheit (vorteilhaft größer als 95% Vol.-% Sauerstoff, bevorzugt größer 99% Sauerstoff, besonders bevorzugt größer 99.5% Sauerstoff), kann die Temperatur des Seitenabzugs (wasserstoffhaltige Gasmischung) auf den gewünschten Sollwert von 800 bis 2000°C, bevorzugt 1000 bis 1800°C, besonders bevorzugt 1100 bis 1600°C, insbesondere 1200 bis 1400°C, eingestellt werden, d.h. die gewünschte Temperatur im RWGS-Reaktor dient als Führungsgröße für die Sauerstoffdosierung. Diese abgezogene wasserstoffhaltige Gasmischung wird in die Reaktionszone der RWGS-Stufe eingeleitet und dient somit gleichzeitig als Edukt und als Wärmeträger für die Versorgung der RWGS-Reaktion. Beispielsweise wird ein atomares Verhältnis, bzw. Wasserstoff zu Sauerstoff von 10:1 bis 100:1, bevorzugt 20:1 bis 80:1, besonders bevorzugt 25:1 bis 60:1, insbesondere 30:1 bis 50:1 verwendet; dies entspricht gegenüber dem Betrieb ohne Sauerstoffzugabe einer adiabaten Temperaturerhöhung am Austritt der Reaktionszone der Reverse-Water-Gas-Shift-Reaktion vorzugsweise von 15K bis 350K, bevorzugt von 20K bis 200K, besonders bevorzugt von 25K bis 170K, ganz besonders bevorzugt von 30K bis 60K (die Angaben entsprechen den Bereichen des H2:O2-Verhältnisses unter folgenden Randbedingungen: molare Feedzusammensetzung: H2:CO2:CH4=2:1:0,2, Feedtemperatur: 900°C, Druck: 10bar).

Die Zugabe von Sauerstoff ist insbesondere vorteilhaft, falls das wasserstoffhaltige Gasgemisch auch Methan von größer als 5 Volumen-% enthält. Methan wird durch die Zugabe von 02 bei einer Temperatur von >800°C weitgehend, gemäß Gleichgewichtsumsatz vorteilhaft zwischen 45 und 99,8 %, bevorzugt zwischen 55 und 70 %, zu CO + H2 partiell oxidiert.

Vorteilhaft wird ein molares Verhältnis von (Rest-)Methan zu Sauerstoff im wasserstoffhaltigen Gasgemisch des Seitenabzugs von 0 bis 10, bevorzugt 0,1 bis 5, besonders bevorzugt von 0,3 bis 3, insbesondere von 0,5 bis 2, gewählt.

In einer vorteilhaften Ausführung wird für diese RWGS ein Reaktor verwendet, beinhaltend
(1) einem Gasfreiraum im oberen Teil, in den Kohlenstoffdioxid, das wasserstoffhaltige Gasgemisch (incl. Rest-Methan) und Sauerstoff gemeinsam oder getrennt eingeleitet werden, sich mischen und vorreagieren
(2) einem Katalysatorbett darunter, wo RWGS und Reformierungsreaktionen ins Gleichgewicht gebracht werden.

Alternativ kann der Sauerstoffstrom direkt in das wasserstoffhaltige Gasgemisch in die Seitenabzugsleitung der Pyrolyse zugegeben werden und einen Teil des Wasserstoffs verbrennen.
In besonderen Ausführungsformen der Erfindung kann eine Aufreinigung des wasserstoffhaltigen Gasgemisches erfolgen. Diese Aufreinigung ist insbesondere dann sinnvoll, wenn das wasserstoffhaltige Gasgemisch große Mengen an Kohlenstoff-haltigen Stäuben oder Aerosolen enthält, die in den nachfolgenden Verfahrensstufen problematisch werden können. Eine Aufreinigung von solchen Stäuben oder Aerosolen kann durch geeignete Maßnahmen erfolgen. Solche Maßnahmen können unter anderem sein: Nutzung eines Zyklons zur Feststoffabscheidung, Nutzung von elektrostatischen Filtern zur Feststoffabscheidung, Nutzung makroporöser Festkörper zur Feststoffabscheidung, Nutzung von Filtermedien zur Feststoffabscheidung und weiterer dem Fachmann bekannter Verfahren. Die beschriebenen Aufreinigungsverfahren können in einem weiten Temperaturspektrum durchgeführt werden, vorteilhaft im Bereich 0 bis 1400°C, bevorzugt von 500°C bis 1400, besonders bevorzugt von 800 bis 1400 °C.

Der Seitenabzug wird vorteilhaft direkt in die Reaktionskammer einer Reverse-Water-Gas-Shift-Reaktion eingespeist.

Das aus der thermischen Zersetzungsreaktion abgezogene wasserstoffhaltige Gas wird in einer Reverse-Water-Gas-Shift-Reaktion vorteilhaft mit Kohlenstoffdioxid zu Synthesegas umgesetzt. Das im wasserstoffhaltigem Gas enthaltene nicht-umgesetzte Methan wird vorteilhaft simultan zur Reverse-Water-Gas-Shift-Reaktion mit Kohlenstoffdioxid und das bei der RWGS Reaktion freigesetzte Wasser reformiert. Vorteilhaft katalysiert der Katalysator der RWGS-Reaktion gleichermaßen die Reformierung von Methan. Durch die Reformierung von Methan wird vorteilhaft die Ausbeute an Kohlenstoffmonoxid erhöht und der Wasserstoffverbrauch für die Reveres-Water-Gas-Shift-Reaktion wenigstens teilweise kompensiert. Gleichzeitig wird die Restkonzentration an Methan im Synthesegas reduziert.

Vorteilhaft wird der für die Reverse-Water-Gas-Shift-Reaktion benötigte Wasserstoff zu mehr als 80% (im Bezug auf den gesamten Wasserstoffbedarf), bevorzugt zu mehr als 90%, durch den Seitenabzug, das wasserstoffhaltige Gasgemisch, aus der Reaktionszone der thermischen Zersetzungsreaktion zur Verfügung gestellt, insbesondere wird der benötigte Wasserstoff ausschließlich durch den Seitenabzug, das wasserstoffhaltige Gasgemisch, aus der Reaktionszone der thermischen Zersetzungsreaktion zur Verfügung gestellt.

Das Volumenstromverhältnis zwischen dem Kohlenstoffdioxid und dem wasserstoffhaltigen Gasgemisch variiert vorteilhaft zwischen 0,1 und 5, bevorzugt zwischen 0,2 und 4, besonders bevorzugt zwischen 0,25 und 3, insbesondere zwischen 0,3 und 2.

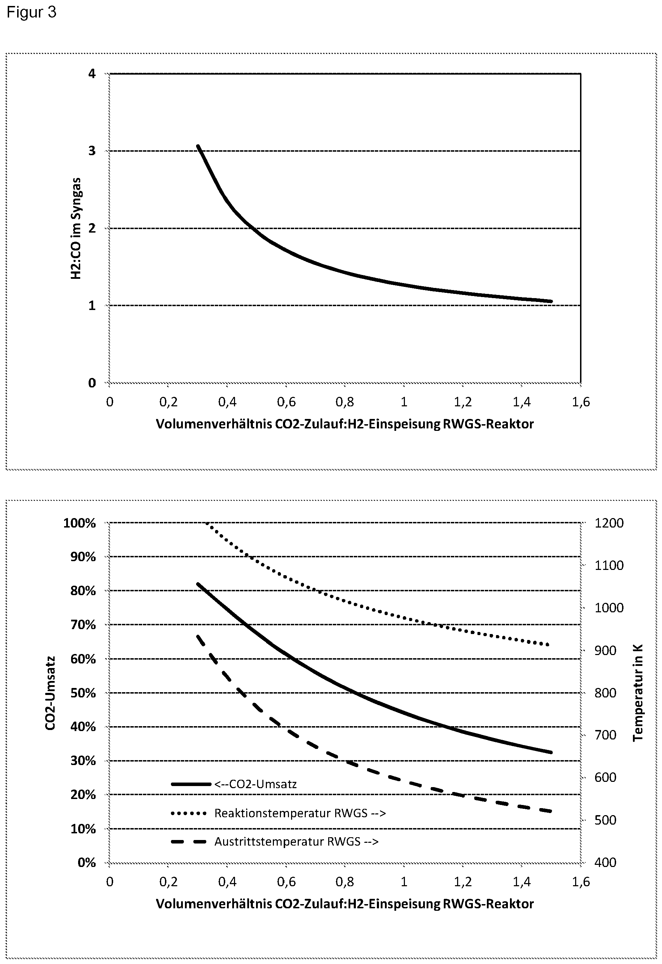

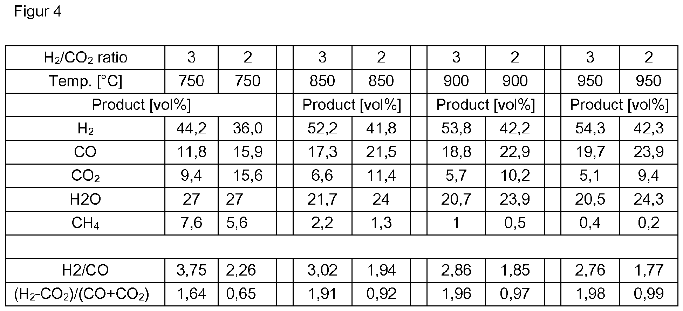

Falls ein molare Verhältnis im Synthesegas von Wasserstoff zu Kohlenstoffmonoxid von 2:1 gewünscht wird, wird vorteilhaft das molares Verhältnis von Kohlenstoffdioxid zu Wasserstoff in dem wasserstoffhaltigen Gasgemisch von ca. 1:2 bis 1:2,5 eingestellt; falls ein molares Verhältnis im Synthesegas von Wasserstoff zu Kohlenstoffmonoxid von 1:1 gewünscht wird, so wird das molares Verhältnis von Kohlenstoffdioxid zu Wasserstoff in dem wasserstoffhaltigen Gasgemisch von vorteilhaft ca. 1:1 bis 1:1,5 eingestellt. Dieses Verhältnis ist über einen weiten Bereich des Umsatzes der thermischen Zersetzungsreaktion stabil. Die Einstellung des gewünschten Wasserstoffs zu Kohlenstoffmonoxid Verhältnis kann der Fachmann nach allen bekannten Verfahren durchführen (siehe Figuren 3 und 4).

Die Figur 3 basiert auf einer RWGS-Stufe mit integrierter Wärmerückführung mit folgenden Annahmen: (i) Abzugstemperatur aus der Pyrolyse 1200°C, (ii) Druck: 1bar_{abs}, (iii) Adiabate Gleichgewichtsstufe für die RWGS-Reaktion, (iv) Wärmerücktausch zwischen dem Syngas und dem Frisch-CO2 in einem idealen Gegenstromwärmetauscher (Gleichgewichtsmodell). Figur 3, obere Graphik, zeigt die Abhängigkeit des H₂:CO-Verhältnis im Synthesegas vom Volumenstromverhältnis CO₂:H₂. Figur 3, untere Graphik, zeigt die Abhängigkeit vom CO₂-Umsatz, die Austrittstemperatur des Synthesegases aus der Reaktionszone und die Austrittstemperatur nach dem Wärmerücktausch in der RWGS-Stufe. Figur 4 verdeutlicht die Zusammensetzung der kohlenstoffmonoxid- und wasserstoff- haltigen Gasmischung, d.h. dem RWGS-Produktstroms, in Abhängigkeit von dem Volumenstromverhältnis CO₂:H₂, Temperatur und Druck.

Eine Anpassung des Verhältnisses von Wasserstoff zu Kohlenstoffmonoxid im Synthesegas (Produktstrom der RWGS Stufe) kann auch durch Zugabe von wasserstoffhaltigem Gasgemisch zum Produktstrom der RWGS Stufe, beispielsweise eine Zugabe von 10 % wasserstoffhaltigen Gasgemisches in Bezug auf das Produktstrom der RWGS Stufe, d.h. dem kohlenstoffmonoxid- und wasserstoff- haltige Gasmischung, bevorzugt 20 %, insbesondere 50 %, bzw. durch Ausschleusen von einem Teil des Wasserstoffs, beispielsweise 10 % im Bezug auf den Wasserstoffgehalt im Synthesegas (Produktstrom der RWGS Stufe), bevorzugt 20 %, Insbesondere 50 %, aus dem RWGS Produktstrom erfolgen.

Die kombinierte Reverse-Water-Gas-Shift-Reaktion und Reformierung von Methan werden vorteilhaft bei Temperaturen von 500°C bis 1500°C, bevorzugt von 700°C bis 1200°C, insbesondere von 800 bis 1000°C durchgeführt.

Die für die Reverse-Water-Gas-Shift-Reaktion und die Reformierung benötigte Prozesswärme wird vorteilhaft zu mindestens 20% durch die sensible Wärme des eingespeisten wasserstoffhaltigen Gasgemisches eingetragen, bevorzugt zu mindestens 50%, besonders bevorzugt zu mindestens 80%, insbesondere wird die für die Reverse-Water-Gas-Shift-Reaktion und die Reformierung benötigte Prozesswärme vollständig durch den eingespeisten wasserstoffhaltigen Gasgemisches eingetragen.

Der Reaktor für die Reverse-Water-Gas-Shift-Reaktion und die Reformierung von Methan ist vorteilhaft ebenfalls mit integrierter Wärmerückführung ausgestattet. Dazu wird der CO2-haltige Zulaufstrom vorteilhaft kalt in den Reaktor eingeleitet und tauscht im Gegenstrom Wärme aus mit dem Produktstrom der RWGS.

Der Reaktor für die Reverse-Water-Gas-Shift-Reaktion und die Reformierung von Methan ist vorteilhaft ein adiabatischer Reaktor. Der Reaktor kann zusätzliche Vorrichtungen zur Wärmeerzeugung und/oder zum Wärmeeintrag beinhalten.
Die kombinierte Reverse-Water-Gas-Shift-Reaktion und Reformierung von Methan wird vorteilhaft bei einem Druck von 1 bis 50 bar durchgeführt. Vorteilhaft entspricht der Druck der Reverse-Water-Gas-Shift-Reaktion dem Druck der thermischen Zersetzungsreaktion, eine mögliche Druckdifferenz zwischen den beiden Reaktionen ist vorteilhaft kleiner als 1 bar, bevorzugt kleiner als 100mbar.

Die Verweilzeit in der Reaktionszone bei der erfindungsgemäßen kombinierten Reverse-Water-Gas-Shift-Reaktion und Reformierung von Methan beträgt vorteilhaft zwischen 0,1 und 30 Sekunden.

Die erfindungsgemäße Reverse-Water-Gas-Shift-Reaktion wird vorteilhaft kontinuierlich oder quasi-kontinuierlich durchgeführt.

Eine bevorzugte Ausgestaltung des RWGS-Reaktors ist ein Reaktor mit periodischer Strömungsumschaltung und Mitteneinspeisung des heißen wasserstoffhaltigen Gasgemisches (Kolios: Zur autothermen Führung der Styrolsynthese mit periodischem Wechsel der Strömungsrichtung. In VDI-Fortschrittsberichte, Reihe 3, vol. 501. Düsseldorf: VDI-Verlag 1997.).

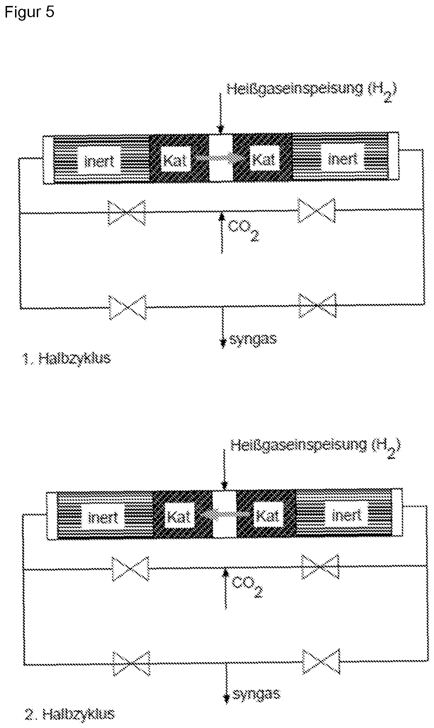

Fig. 5 zeigt eine Prinzip-Skizze des RWGS-Reaktors. Der Reaktor ist als adiabater Festbettreaktor mit strukturierter Packung ausgeführt. Die mittlere Zone enthält den RWGS-Katalysator.

Das eingespeiste wasserstoffhaltige Gasgemisch kann in der katalytisch aktiven Zone entweder zentral oder verteilt eingespeist werden. Die Randzonen, die als Wärmetauscherzonen für die Wärmeintegration dienen, enthalten eine inerte keramische Packung. Durch Einbauten mit hoher spezifischer Oberfläche, beispielsweise Wabenmonolithe mit hoher Zelldichte (> 100 cpsi) oder Kugeln mit kleinem Durchmesser (<5mm) kann eine effiziente Wärmeübertragung für die Wärmeintegration erreicht werden. Vorteilhaft wird in periodischen Zeitintervallen zwischen 10sec und 30min, bevorzugt 30sec und 10min, besonders bevorzugt 60sec und 300sec die Anströmseite für die Zuführung des CO₂-reichen Stromes umgeschaltet. Die Umschaltung erfolgt vorteilhaft über eine Ventil- oder Klappensteuerung wie sie dem Fachmann aus Anlagen der regenerativen thermischen Nachverbrennung von Abluftströmen bekannt ist.

Das Kohlenstoffdioxid weist vorteilhaft beim Eintritt in die Reaktionszone der Reverse-Water-Gas-Shift-Reaktion eine Temperatur von 500°C bis 1200°C, bevorzugt 700°C bis 1100°C, besonders bevorzugt zwischen 700°C und 1000°C auf.

In einer weiteren alternativen Ausgestaltung kann die Reaktionszone der RWGS-Stufe beheizt sein, beispielsweise nach dem Vorbild eines Reformers (Reimert et al.: Gas Production, 2. Process. In Ullmann's Encyclopedia of Industrial Chemsitry. Vol. 16, pp. 423-482, Verlag Wiley-VCH, 2012.) Bei dieser Form der Ausgestaltung können die Feedströme (Kohlenstoffdioxid und wasserstoffhaltiges Gasgemisch) und der Produktstrom, das Synthesegas, thermisch voneinander entkoppelt werden. Das Synthesegas kann am Austritt aus der Reaktionszone in einem Quench abgeschreckt werden, um das bei hoher Temperatur erzielte Reaktionsgleichgewicht einzufrieren. Die Eintrittstemperatur des Kohlenstoffdioxids in die Reaktionszone liegt bei dieser Ausgestaltung vorteilhaft zwischen 50 und 500°C, bevorzugt zwischen 200 und 500°C, insbesondere zwischen 300 und 500°C.

Der Kohlenstoffdioxid-Umsatz der erfindungsgemäßen kombinierten Reverse-Water-Gas-Shift-Reaktion und Reformierung von Methan beträgt vorteilhaft größer als 30%, insbesondere größer als 60%. Vorteilhaft liegt Kohlenstoffdioxid-Umsatz im Bereich von 60 bis 100%, insbesondere 75 bis 100%.

Die Nebenreaktion der Methanisierung beträgt vorteilhaft weniger als 10%, bevorzugt weniger als 3% bezogen auf den eingesetzten Kohlenstoffdioxid. Insbesondere wird das im wasserstoffhaltigem Gasgemisch enthaltene Methan durch den Kohlenstoffdioxid reformiert.

Die Nebenreaktion der Verkokung des RWGS Katalysators beträgt vorteilhaft weniger als 0,001% bezogen auf die gesamte konvertierte Kohlenstoffdioxidmenge, bevorzugt weniger als 0,0001% bezogen auf die gesamte konvertierte Kohlenstoffdioxidmenge.

Der Wirkungsgrad der Wärmeintegration der erfindungsgemäß gekoppelten Verfahren der thermischen Zersetzungsreaktion von Kohlenwasserstoffen mit der kombinierten Reverse-Water-Gas-Shift-Reaktion Reformierung von Methan liegt vorteilhaft bei größer 84 %, bevorzugt bei größer 88 %, besonders bevorzugt bei größer 90 %, insbesondere bei größer 92 %. Der Wirkungsgrad ist definiert als das Verhältnis der insgesamt von der thermischen Zersetzung und der RWGS aufgenommenen Reaktionswärme bezogen auf die gesamte dem Prozess zugeführte Wärmemenge.

Das Katalysatormaterial für den RWGS-Katalysator genügt vorteilhaft einer Reihe von Anforderungen, um sich als geeignet für die Durchführung des Verfahrens zu erweisen. Zum ersten sollte ein solches Material eine hohe Sinterstabilität des Aktivmetalles besitzen, um bei den hohen Arbeitstemperaturen keinen Aktivitätsverlust durch vorzeitige Alterung aufzuweisen. Zum zweiten sollte die hydrothermale Stabilität des Katalysatormaterials hinreichend sein, um einen vorzeitigen strukturellen Kollaps des Materiales zu verhindern, denn pro Mol konvertiertem Kohlenstoffdioxid wird ein Mol Wasser produziert. Zum dritten sollte das Material eine hinreichende Koksstabilität gegenüber Koksprekursoren wie kleinen Olefinen, Aliphaten und Aromaten aufweisen, die sich im Heiss-Wasserstoff aus der Pyrolysestufe befinden können. Zum vierten sollte das Material, insbesondere bei der Herstellung von CO-reichem Synthesegas mit einem Wasserstoff zu Kohlenstoffmonoxidanteil kleiner als 1,5 die CO-Disproportionierung und den damit verbundenen Koksaufbau anteilig verhindern, beziehungsweise einmal gebildeten Koks durch Reaktion mit Wasserstoff im Sinne der Methanisierung oder durch Reaktion mit Kohlenstoffdioxid im Sinne der Boudouard-Reaktion verkonvertieren.

Erfindungsgemäße Katalysatoren beinhalten in der Regel geeignetes Aktivmetall und geeignetes Trägermaterial. Geeignete Aktivmetalle können unter anderem sein: Platinmetalle wie Rh, Pt, Ir, Pd oder Ru. Besonders bevorzugt sind bei en Platinmetallen Pt oder Ir. Geeignete Eisenmetalle können unter anderem sein Ni, Co und Fe. Besonders bevorzugt sind hier Ni oder Co. Ein weiteres ebenfalls bevorzugtes Aktivmetall ist Kupfer. Kombinationen aus den genannten Aktivmetallen sind ebenfalls möglich. Dabei können solche Kombinationen aus Aktivmetallen Legierungen oder intermetallische Phasen bilden, es können bestimmte Metalle metallisch, andere oxidisch nebeneinander vorliegen, oder bestimmte Anteile der Metall-Komponenten können metallisch oder oxidisch nebeneinander vorliegen. Geeignete Elemente zur Promotierung der Aktivmetalle, die oxidisch oder elementar vorliegen können, können unter anderem sein Alkalimetalle, Erdalkalimetalle, insbesondere Mg, Ca und Sr, Lanthanoide wie La und Ce, Gallium, Zinn, Zink, Vanadium, Wolfram, Niob, Tantal, Mangan oder Schwefel.

Geeignete Trägermaterialien für die genannten Aktivmetallkomponenten sind insbesondere solche Trägermaterialien, die sich durch eine hinreichend hohe Oberfläche, eine hinreichend hohe Wechselwirkung mit den Aktivmetallen und den Promotoren, die eine hohe Dispersion und Alterungsstabilität erlaubt. Ebenfalls erwünscht ist eine hohe Wärmeleitfähigkeit des Materiales, um eine gute thermische Einkopplung des wärmetragenden Gases zur ermöglichen. Geeignete Trägermaterialien sind unter anderem oxidische Trägermaterialien, insbesondere auch sogenannte Mischmetalloxide, die aus mehreren metallischen Komponenten in oxidischer Matrix bestehen. Solche Mischmetalloxide können als reinphasige Oxide vorliegen, oder als Phasenmischungen. Beispiele für geeignete Mischmetalloxide sind unter anderem Spinelle wie Magnesium-Aluminium-Spinell, Fluorite wie Cer-Zirkon Fluorite, Hexaaluminate oder Magnetoplumbite, Perovskite, Titanate, Ferrite, feste Lösungen der Zirkon-Oxide mit Lanthanoiden, oder komplexe Alumosilikate und andere dem Fachmann bekannte Mischmetalloxide. Andere ebenfalls erfindungsgemäße Trägermaterialien sind unter anderem Carbide wie WC, MoC, BC oder SiC, Nitride oder Boride.

Zu den erfindungsgemäßen Katalysatoren gehören ebenfalls Verbindungsklassen, bei denen das Aktivmetall aus einer geeigneten Precursorform unter Formierungs- oder Reaktionsbedingungen freigesetzt wird. Solche Verbindungen können unter anderem sein Oxide, gemischte Oxide oder Carbonate.

Die Herstellung der oben genannten erfindungsgemäßen Katalysatoren kann nach dem Fachmann bekannten Methoden erfolgen durch Fällungsreaktionen, Imprägnierverfahren, Reaktionen von geschmolzenen Metallen, Salzen oder Oxiden oder von Metallen, Salzen oder Oxiden bei hohen Temperaturen. Ebenfalls eingeschlossen sind Behandlungsschritte mit oxidierenden oder reduzierenden Gasatmosphären bei erhöhten Temperaturen und andere dem Fachmann bekannte Maßnahmen zur Erhöhung von Aktivität und Stabilität.

Ebenfalls erfindungsgemäß ist der Einsatz von mehreren Katalysatoren in einem Katalysatorfestbett. Dabei kann eine solche Verfahrensweise dazu beitragen den Anteil an teurem aber hochtemperatur- und verkokungsresistentem Edelmetall einzusparen. Eine solche Anwendung ist als strukturiertes Bett mit gestaffelten Schichten aus verschiedenen Katalysatoren oder als Mischung möglich.
Andere Möglichkeiten des Einsatzes des Katalysators sind alternative Betriebsvarianten wie die Verwendung im Wirbelbett oder die Verwendung als Beschichtungsmaterial/Washcoat auf metallischen bzw. keramischen Monolithen oder Wärmetauschern.

Die Gasabtrennung des Synthesegases von erzeugtem Wasser, Kohlenstoffdioxid und ggf. Methan kann nach allen dem Fachmann bekannten Verfahren erfolgen (Gas Production 3. In Ullmann's Encyclopedia of Industrial Chemistry. Wiley-VCH, Weinheim, 2012)

Die CO2-Emission liegt beim erfindungsgemäßen Synthesegas-Verfahren vorteilhaft bei negativen Werten (CO2-Senkung), bevorzugt bei weniger als -50 kg_{CO2}/100 kg_{Synthesegas}, insbesondere bei weniger als -100 kg_{CO2}/100 kg_{Synthesegas}.

Für eine Anlage mit einer Wasserstoffkapazität von 100kt/a (entsprechend einer Synthesegaskapazität von 700kt/a bei H2:CO=2:1) ergibt sich eine Gutschrift durch die CO2-Einsparung von 14 Mio€/a. Dabei wird ein Zertifikatwert von 20€/tCO2 angenommen.

Die Vorteile des neuartigen Verfahrens liegen zum einen in der Bereitstellung von Wasserstoff bzw. Synthesegas mit geringem CO₂-Footrpint. Zum anderen kann bei dem erfindungsgemäßen Verfahren das Wasserstoff zu Kohlenstoffmonoxid-Verhältnis bedarfs-gesteuert eingestellt werden und ist ferner in einem weiten Bereich unabhängig vom Umsatz der thermischen Zersetzungsreaktion.

Durch das erfindungsgemäß gekoppelte Verfahren können Einsparungen von Betriebskosten durch die verbesserte Wärmeintegration erreicht werden. Ferner können Kapitalkosten durch die einfache Gestaltung der RWGS-Stufe eingespart werden.

Ferner kann durch das erfindungsgemäß gekoppelte Verfahren in der Pyrolysestufe eine vollständige Wärmeintegration erreicht werden. Die Wärmeverluste konnten somit im Vergleich zu zwei separaten Prozessen halbiert werden. Durch die hohen Reaktionstemperaturen der Reverse-Water-Gas-Shift-Reaktion konnte die Methanisierung und die Verkokung in dieser Reaktion wirksam verhindert werden.

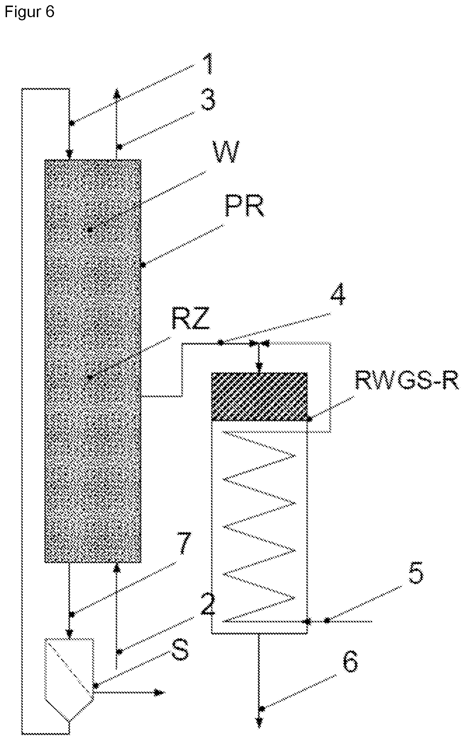

Die Figur 6 zeigt eine Variante des erfindungsgemäß gekoppelten Verfahrens der thermischen Zersetzung von Kohlenwasserstoffen mit der Reverse Water Gase Shift Reaktion, bei dem Wasserstoff, Synthesegas und einem kohlenstoffhaltigen Produkt parallel in einem kontinuierlichen Prozess gewonnen werden.

Über die Zuführung 1 wird ein kohlenstoffhaltiges Granulat, bei dem es sich beispielsweise um Koksgrus handelt, mit Umgebungstemperatur von oben in den Reaktionsraum R eingeleitet, durch den es nachfolgend unter Wirkung der Schwerkraft in einem Wanderbett W nach unten geführt wird. Ein Kohlenwasserstoffe enthaltendes Gas 2, bei dem es sich vorzugsweise um Erdgas handelt, wird gleichzeitig von unten in den Pyrolyse-Reaktionsraum PR geleitet und im Gegenstrom durch das Wanderbett W nach oben geführt. Das Gas 2, das bei seinem Eintritt in den Reaktionsraum PR Umgebungstemperatur aufweist, wird auf seinem Weg nach oben in direktem Wärmetausch mit dem Wanderbett W bis zur Zersetzungstemperatur der Kohlenwasserstoffe aufgeheizt, die unter diesen Bedingungen in einer endothermen Reaktion in Wasserstoff und Kohlenstoff zerfallen. Der hierbei gebildete Kohlenstoff lagert sich vorteilhaft zu mehr als 95 Gew.-% an die kohlenstoffhaltigen Körner des Wanderbetts W an, wodurch deren Qualität verbessert wird. Zusammen mit nicht oder nur zum Teil umgesetzten Kohlenwasserstoffen strömt der gebildete heiße Wasserstoff weiter nach oben, wobei er in direktem Wärmetausch mit dem Wanderbett W abgekühlt wird, so dass über Leitung 3 ein Wasserstoff enthaltendes Gasgemisch mit einer Temperatur abgezogen werden kann, die maximal 25 bis 50K oberhalb der Umgebungstemperatur liegt.

Aus der Reaktionszone RZ des Pyrolyse-Reaktionsraums PR wird ein Teil des heißen wasserstoffhaltigen Gasgemisches 4 abgezogen, der direkt dem Reverse Water Gas Shift Reaktor RWGS-R zugeführt wird. Der heiße Wasserstoff 4 wird im Reverse Water Gas Shift Reaktor RWGS-R mit Kohlenstoffdioxid 5, das von unten dem Reaktor RWGS-R zugeführt wird, umgesetzt. Das entstehende Synthesegas 6 wird von oben aus dem Reaktor RWGS-R abgezogen. Die Wärme des Synthesegas-Stroms 6 wird zur Aufheizung des Kohlenstoffdioxid-Stroms 5 verwendet.

Am unteren Ende des Pyrolyse-Reaktionsraums PR wird Granulat 7 mit nahezu Umgebungstemperatur abgezogen, das aufgrund der Kohlenstoffanlagerungen beispielsweise als Hochofenkoks oder Kokereizuschlagsstoff eingesetzt werden kann. Bestandteile des Granulats 7, die die Qualitätsanforderungen nicht erfüllen, weil sie einen zu großen (> 80 mm) oder zu kleinen Durchmesser (< 35 mm) oder beispielsweise eine zu geringe Festigkeit (Trommelfestigkeit I40 für Hochofenkoks > 40% aufweisen gemäß ISO/FDIS 18894:2003) aufweisen, werden in der Trenneinrichtung S durch Siebung und/oder Sichtung abgetrennt und nach einer eventuellen Zerkleinerung wieder in den Pyrolyse-Reaktionsraums PR zurückgeführt.

## Patentansprüche

1. Verfahren zur parallelen Herstellung von Wasserstoff, Kohlenstoffmonoxid und einem kohlenstoffhaltigen Produkt, **dadurch gekennzeichnet, dass** ein oder mehrere Kohlenwasserstoffe thermisch zersetzt werden und zumindest ein Teil des entstehenden wasserstoffhaltigen Gasgemisches aus der Reaktionszone des Zersetzungsreaktors bei einer Temperatur von 800 bis 1400 °C abgezogen und der Reaktionszone eines Reversen Wassergas-Shift Reaktors mit einem Sollwert von 800 bis 2000°C zugeführt wird und mit Kohlenstoffdioxid in der Reversen Wassergas-Shift Reaktion zu einer kohlenstoffmonoxid- und wasserstoff- haltigen Gasmischung umgesetzt wird.

2. Verfahren nach Anspruch 1, **dadurch gekennzeichnet, dass** 10 bis 40 % des wasserstoffhaltigen Gasgemisches bezogen auf das gesamte in der Reaktion entstehende wasserstoffhaltige Gasgemisch aus der Reaktionszone der thermischen Zersetzung abgezogen wird.

3. Verfahren nach Anspruch 1 oder 2, **dadurch gekennzeichnet, dass** die für die Umsetzung von Wasserstoff und/oder Methan mit Kohlenstoffdioxid zu einer kohlenstoffmonoxid- und wasserstoff- haltigen Gasmischung benötigte Prozesswärme zu mindestens 80 % durch das eingespeiste wasserstoffhaltige Gasgemisch eingetragen wird.

4. Verfahren nach einem oder mehreren der Ansprüche 1 bis 3, **dadurch gekennzeichnet, dass** der Sollwert des wasserstoffhaltigen Gasgemisches durch eine geregelte Zugabe eines sauerstoffhaltigen Gases zu dem abgezogenen wasserstoffhaltigen Gasgemisch vor der Umsetzung mit Kohlenstoffdioxid eingestellt wird.

5. Verfahren nach Anspruch 4, **dadurch gekennzeichnet, dass** die Umsetzung des wasserstoffhaltigen Gasgemisches mit Kohlenstoffdioxid in einem Reaktor stattfindet, der oberhalb des Katalysatorbettes einen Gasfreiraum aufweist, in den das wasserstoffhaltige Gasgemisch und das sauerstoffhaltige Gas gemeinsam oder getrennt eingeleitet werden und sich vermischen und ggf. vorreagieren.

6. Verfahren nach Anspruch 4, **dadurch gekennzeichnet, dass** das sauerstoffhaltige Gas in die Seitenabzugsleitung, die sich zwischen dem Zersetzungsreaktor und dem Reversen Wassergas-Shift-Reaktor befindet, zu dem wasserstoffhaltigen Gasgemisch gegeben wird.

7. Verfahren nach einem der Ansprüche 4 bis 6, **dadurch gekennzeichnet, dass** ein Verhältnis von Sauerstoff zu (Rest-)Methan im wasserstoffhaltigen Gasgemisch des Seitenabzugs von 0,1 bis 5 gewählt wird.

8. Verfahren nach einem der Ansprüche 4 bis 6, **dadurch gekennzeichnet, dass** als sauerstoffhaltiges Gas Sauerstoff technischer Reinheit eingesetzt wird.

9. Verfahren nach einem der Ansprüche 1 bis 8, **dadurch gekennzeichnet, dass** bei einem angestrebten molaren Verhältnis im Synthesegas von Wasserstoff zu Kohlenstoffmonoxid von 2:1 das molare Verhältnis von Kohlenstoffdioxid zu Wasserstoff in dem wasserstoffhaltigen Gasgemisch von 1:2 bis 1:2,5 eingestellt wird und bei einem angestrebten molaren Verhältnis im Synthesegas von Wasserstoff zu Kohlenstoffmonoxid von 1:1 das molare Verhältnis von Kohlenstoffdioxid zu Wasserstoff in dem wasserstoffhaltigen Gasgemisch von 1:1 bis 1:1,5 eingestellt wird.

## Claims

1. A process for the parallel preparation of hydrogen, carbon monoxide and a carbon-comprising product, wherein one or more hydrocarbons are thermally decomposed and at least part of the hydrogen-comprising gas mixture formed is taken off from the reaction zone of the decomposition reactor at a temperature of from 800 to 1400°C and fed to the reaction zone of a reverse water gas shift reactor having an intended value of from 800 to 2000°C and reacted with carbon dioxide in the reverse water gas shift reaction to form a gas mixture comprising carbon monoxide and hydrogen.

2. The process according to claim 1, wherein from 10 to 40% of the hydrogen-comprising gas mixture, based on the total hydrogen-comprising gas mixture formed in the reaction, is taken off from the reaction zone of the thermal decomposition.

3. The process according to claim 1 or 2, wherein the process heat required for the reaction of hydrogen and/or methane with carbon dioxide to form a gas mixture comprising carbon monoxide and hydrogen is introduced to an extent of at least 80% by the hydrogen-comprising gas mixture fed in.

4. The process according to one or more of claims 1 to 3, wherein the intended value of the hydrogen-comprising gas mixture is set by controlled addition of an oxygen-comprising gas to the hydrogen-comprising gas mixture taken off prior to the reaction with carbon dioxide.

5. The process according to claim 4, wherein the reaction of the hydrogen-comprising gas mixture with carbon dioxide takes place in a reactor which, above the catalyst bed, has a gas-free space into which the hydrogen-comprising gas mixture and the oxygen-comprising gas are introduced together or separately and mix and may pre-react.

6. The process according to claim 4, wherein the oxygen-comprising gas is added to the hydrogen-comprising gas mixture in the side offtake line between the decomposition reactor and the reverse water gas shift reactor.

7. The process according to any of claims 4 to 6, wherein a ratio of oxygen to (residual) methane in the hydrogen-comprising gas mixture of the side offtake of 0.1 to 5 is selected.

8. The process according to any of claims 4 to 6, wherein oxygen of technical grade purity is used as oxygen-comprising gas.

9. The process according to any of claims 1 to 8, wherein, for a target molar ratio in the synthesis gas of hydrogen to carbon monoxide of 2:1, the molar ratio of carbon dioxide to hydrogen in the hydrogen-comprising gas mixture of 1:2 to 1:2.5 is established and, for a target molar ratio in the synthesis gas of hydrogen to carbon monoxide of 1:1, the molar ratio of carbon dioxide to hydrogen in the hydrogen-comprising gas mixture of 1:1 to 1:1.5 is established.

## Revendications

1. Procédé de fabrication parallèle d'hydrogène, de monoxyde de carbone et d'un produit contenant du carbone, **caractérisé en ce qu'**un ou plusieurs hydrocarbures sont décomposés thermiquement et au moins une partie du mélange gazeux contenant de l'hydrogène formé est soutiré de la zone de réaction du réacteur de décomposition à une température de 800 à 1 400 °C et introduit dans la zone de réaction d'un réacteur de réaction du gaz à l'eau inverse avec une valeur de consigne de 800 à 2 000 °C, et transformé avec du dioxyde de carbone dans la réaction du gaz à l'eau inverse en un mélange gazeux contenant du monoxyde de carbone et de l'hydrogène.

2. Procédé selon la revendication 1, **caractérisé en ce que** 10 à 40 % du mélange gazeux contenant de l'hydrogène, par rapport à l'ensemble du mélange gazeux contenant de l'hydrogène formé lors de la réaction, est déchargé de la zone de réaction de la décomposition thermique.

3. Procédé selon la revendication 1 ou 2, **caractérisé en ce que** la chaleur de procédé nécessaire pour la réaction d'hydrogène et/ou de méthane avec du dioxyde de carbone pour former un mélange gazeux contenant du monoxyde de carbone et de l'hydrogène est introduite à hauteur d'au moins 80 % par le mélange gazeux contenant de l'hydrogène introduit.

4. Procédé selon une ou plusieurs des revendications 1 à 3, **caractérisé en ce que** la valeur de consigne du mélange gazeux contenant de l'hydrogène est ajustée par un ajout régulé d'un gaz contenant de l'oxygène au mélange gazeux contenant de l'hydrogène soutiré avant la réaction avec le dioxyde de carbone.

5. Procédé selon la revendication 4, **caractérisé en ce que** la réaction du mélange gazeux contenant de l'hydrogène avec du dioxyde de carbone a lieu dans un réacteur qui comprend au-dessus du lit catalytique un espace libre de gaz, dans lequel le mélange gazeux contenant de l'hydrogène et le gaz contenant de l'oxygène sont introduits ensemble ou séparément et se mélangent et pré-réagissent éventuellement.

6. Procédé selon la revendication 4, **caractérisé en ce que** le gaz contenant de l'oxygène est introduit dans le mélange gazeux contenant de l'hydrogène dans la conduite de soutirage latérale, qui se trouve entre le réacteur de décomposition et le réacteur de réaction du gaz à l'eau inverse.

7. Procédé selon une ou plusieurs des revendications 4 à 6, **caractérisé en ce qu'**un rapport entre l'oxygène et le méthane (résiduel) dans le mélange gazeux contenant de l'hydrogène du soutirage latéral est choisi de 0,1 à 5.

8. Procédé selon une ou plusieurs des revendications 4 à 6, **caractérisé en ce que** de l'oxygène de pureté technique est utilisé en tant que gaz contenant de l'oxygène.

9. Procédé selon une ou plusieurs des revendications 1 à 8, **caractérisé en ce qu'**à un rapport molaire visé dans le gaz de synthèse entre l'hydrogène et le monoxyde de carbone de 2:1, le rapport molaire entre le dioxyde de carbone et l'hydrogène dans le mélange gazeux contenant de l'hydrogène est ajusté de 1:2 à 1:2,5 et, à un rapport molaire visé dans le gaz de synthèse entre l'hydrogène et le monoxyde de carbone de 1:1, le rapport molaire entre le dioxyde de carbone et l'hydrogène dans le mélange gazeux contenant de l'hydrogène est ajusté de 1:1 à 1:1,5.
